Europäisches Patentamt

European Patent Office

Office européen des brevets

(11) Publication number: **0 119 843**
**B1**

(12) **EUROPEAN PATENT SPECIFICATION**

(45) Date of publication of patent specification: **05.12.90**

(21) Application number: **84301788.0**

(22) Date of filing: **16.03.84**

(51) Int. Cl.⁵: **H 04 Q 11/04,** H 04 M 11/06,
H 04 L 12/52

(54) A system for linking channel group in digital communication network.

(30) Priority: **18.03.83 JP 45400/83**

(43) Date of publication of application:
**26.09.84 Bulletin 84/39**

(45) Publication of the grant of the patent:
**05.12.90 Bulletin 90/49**

(84) Designated Contracting States:
**DE FR GB SE**

(56) References cited:
EP-A-0 099 978
DE-A-3 311 043
FR-A-2 087 175
GB-A-2 074 420
US-A-3 890 469

COMMUNICATIONS PRESENTEES AU
COLLOQUE INTERNATIONAL SUR LA
TELEINFORMATIQUE, Paris, 24th-28th March
1969, vol. 1, pages 367-375, Paris, FR; M. REVEL:
"Possibilités de transmission de données dans
les reseaux intégrés de commutation
temporelle"

(73) Proprietor: **FUJITSU LIMITED**
**1015, Kamikodanaka Nakahara-ku**
**Kawasaki-shi Kanagawa 211 (JP)**

(72) Inventor: **Nakada, Hiroshi**
**c/o FUJITSU LIMITED Patent Dpt., 1015**
**Kamikodanaka**
**Nakahara-ku Kawasaki-shi Kanagawa 211 (JP)**
Inventor: **Kawano, Hisao**
**c/o FUJITSU LIMITED Patent Dpt., 1015**
**Kamikodanaka**
**Nakahara-ku Kawasaki-shi Kanagawa 211 (JP)**

(74) Representative: **Sunderland, James Harry et al**
**HASELTINE LAKE & CO Hazlitt House 28**
**Southampton Buildings Chancery Lane**
**London WC2A 1AT (GB)**

(56) References cited:
INTERNATIONAL SWITCHING SYMPOSIUM,
Montreal, 21st-25th September 1981, session
42C, paper 1, pages 1-6; M. BURMEISTER et al.:
"Line concentrators for an experimental digital
wideband network with decentralized
switching"

Courier Press, Leamington Spa, England.

## Description

The present invention relates to a system for linking a group of channels (a channel group) between two terminals in a digital communication network.

Recently, demand for facilities for non-telephone data transmission, for example for high speed data communication, facsimile or image transmission, is increasing. Such a service requires a broader band data link than a telephone channel. On the other hand, the trend towards digitizing of telephone networks which are already widely established is progressing. Therefore, a data transmission network and a telephone network are constructed differently from one another.

A telephone switching system, be it an analog system or a digital system, is based on the principle that a channel for linking two terminals is established by selecting one channel through idle trunks available at the time, and by switching them to the terminals each time a call is to be made. Thus, the channel path is selected by switching equipment located between two terminals and the channel path used to link the two terminals differs from call by call.

Previously, therefore, in order to link a channel group between two terminals (a group connection) maintaining a specific relationship between each channel of the group and the others (space order), a specific control signal has been used for the switching systems employed, to bundle together the channels in the specific order.

Such specially controlled channel switching networks cannot be used for general purposes, they are idle at all times except when they are put to their special use. Therefore, such special connection requirements for channel groups are not desirable, from the viewpoint of channel utilization.

GB-A-2 074 420 discloses a data transmission system for transmission of a high-speed serial data stream between geographically separated originating and terminating ends, including, at the originating end, means for distributing the high-speed serial data stream bit-by-bit or sample-by-sample and sequentially to a plurality of lower-speed channels, and, at the terminating end, means for collating the lower-speed channels to derive the high-speed serial data stream.

The high-speed serial data stream may be facsimile information.

The high-speed serial data stream arrives at an originating terminal, which may have digital facilities, and is distributed to a predetermined plurality of lower speed channels. These channels are connected to a first central office. From the first central office these channels reach a last central office over individual selected routes in a switched telephone network, using standard telephone routing techniques. The last central office is connected by a plurality of channels to a terminating terminal. At the terminating terminal, data messages from the lower speed channels are collated to reproduce the original high-speed data signal.

From the originating terminal, the format for the data in each channel comprises a header block, a data message block and a flag block. The header block comprises a channel marker (as a start signal), a number representing the total number of channels and the channel number of one particular channel.

From a message appearing on a channel, the terminating terminal distinguishes the header and recognises the total number of channels, the particular channel number and the channel marker. From the total number of channels, the terminating end recognises how many pieces of apparatus should be set up in order to receive all the data and also when all channels have been received. The channel number enables the terminating end to identify a given channel. This enables the terminating terminal to collate the messages on the channels to reproduce the original high-speed data signal.

According to the present invention, there is provided a system for connecting channels, in an ordered manner, between a terminal which is or is acting as a sending terminal and has a group of sending channels and a terminal which is or is acting as a receiving terminal and has a group of receiving channels, via a digital communication network, comprising:-

sending terminal equipment, which is provided in the terminal which is or is acting as a sending terminal, operable to generate a plurality of data items for sending over respective channels of said group of sending channels at a time;

receiving terminal equipment, which is provided in the terminal which is or is acting as a receiving terminal, operable to receive the plurality of data items over respective channels of said group of receiving channels;

a digital communication network which includes a digital data transmission network and a digital data switching network, operable to link sending and receiving channels of the terminals via telephone channels of the network;

each of the terminals having a respective group trunk comprising:-

means for originating or terminating a call signal assigned to the group trunk of the terminal which is or is acting as a receiving terminal, accordingly as the terminal in which the means is provided is or is acting as a sending terminal or a receiving terminal;

means for providing a channel identification signal for each data item sent out from sending terminal equipment when the terminal in which the trunk is provided is or is acting as a sending terminal, each channel identification signal serving to identify the respective receiving channel of the group of receiving channels over which the data items concerned is to be received;

means for distinguishing channel identification signals from received data items when the terminal in which the trunk is provided is or is acting

2

as a receiving terminal;

the group trunks being thus operable to control the space and time order of the plurality of data items arriving at the terminal which is or is acting as receiving terminal, to connect the sending and receiving channels in an ordered manner.

An embodiment of the present invention can provide a system for the orderly connection of a group of channels from a sending terminal to a receiving terminal via a digital communication network, using neither a special connection of line signals, nor special control signals.

An embodiment of the present invention can improve the utilization factor of a digital network system.

The present invention can provide for the utilization of a digital telephone network as a data transmission network, and improvement of the utilization factor of a digital telephone system.

In an embodiment of the invention a group trunk (so-named by the inventors) is added to each user terminal of a subscriber wishing to use a group of channels.

The group trunk establishes a group of channels between sending and receiving terminals as a normal trunk, in a way similar to the ordinary method of telephone call processing, and then it rearranges any undesirable relationships (disorder) between channels in the group as they arrive at the receiving terminal. Thus the group trunk provides for the orderly connection of channel groups, maintaining the space and time relationships between the channels of the group as specified by the sending terminal.

A group trunk is provided with a computer (central processor unit CPU) and has the following functions:

1. As a sending trunk, originating calls in each channel to be grouped at a sending terminal.

2. As a sending trunk, sending a call signal assigned for a receiving trunk to each channel of the group.

3. As a receiving trunk, receiving a call signal and sending back an answer signal to a sending trunk, to establish the data channels.

4. As a sending trunk, providing each data item to be sent with a channel identification code for each data channel through which data is to be sent.

5. As a receiving trunk, detecting the channel identification codes of received signals, and rearranging the space order of the channels within the group.

6. Equalizing time delay in each of the established data channels.

Using such group trunk, it is possible to link a channel group of a sending terminal to a receiving terminal, maintaining space order and time phase relationships between each channel of the group, simply by dialling a telephone code of a receiving trunk and specifying a channel identification code of the data channel. The system utilizes existing digital communication networks and does not adversely affect ordinary operation of the networks.

Reference is made, by way of example, to the accompanying drawings, in which:-

Fig. 1 is a schematic block diagram of a system of a centralized maintenance system for a telephone company, showing an embodiment of a system for linking a channel group in accordance with the present invention,

Fig. 2 is a schematic block diagram illustrating composition and operation of group trunks in accordance with an embodiment of the present invention,

Fig. 3 is a schematic block diagram of another group trunk which links a channel group in accordance with an embodiment of the present invention,

Fig. 4 diagrammatically illustrates phase relationships between data elements at several points in a data transmission system,

Fig. 5 is a schematic block diagram of still another group trunk in accordance with an embodiment of the present invention, which provides for simplification as compared with Fig. 2 or 3, and

Fig. 6 is a schematic diagram illustrating a comprehensive data transmission network, utilizing a system for group connection in accordance with the present invention.

In the Figures, similar notation or reference signs are used for similar or corresponding parts.

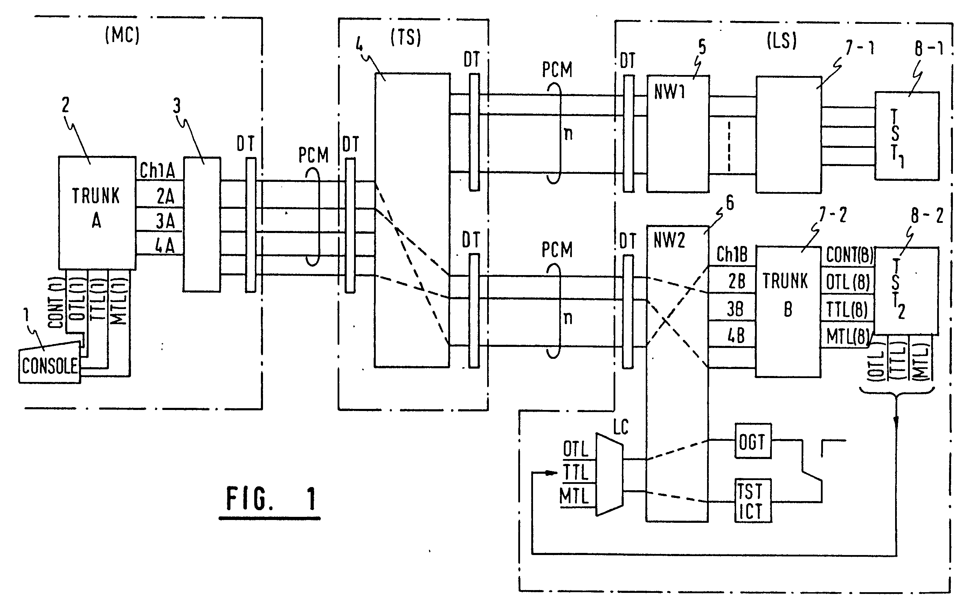

Fig. 1 is a block diagram of a centralized maintenance and operations center for a telephone company, which uses a channel group linking system.

In the Figure, 1 is a supervisory console installed in a central maintenance office. 2 is a group trunk (so-named by the inventors) in accordance with the present invention, and 3 is an interface circuit. Both 2 and 3 are installed in maintenance center MC. 4 is a toll switch network which is installed in a toll switch office TS. 5 and 6 are local switch networks installed in a local switch office LS. The switch networks 4, 5 and 6 together provide a communication network. 7-1 and 7-2 are group trunks installed in the local switch office LS, and 8-1 and 8-2 are adapters for testing.

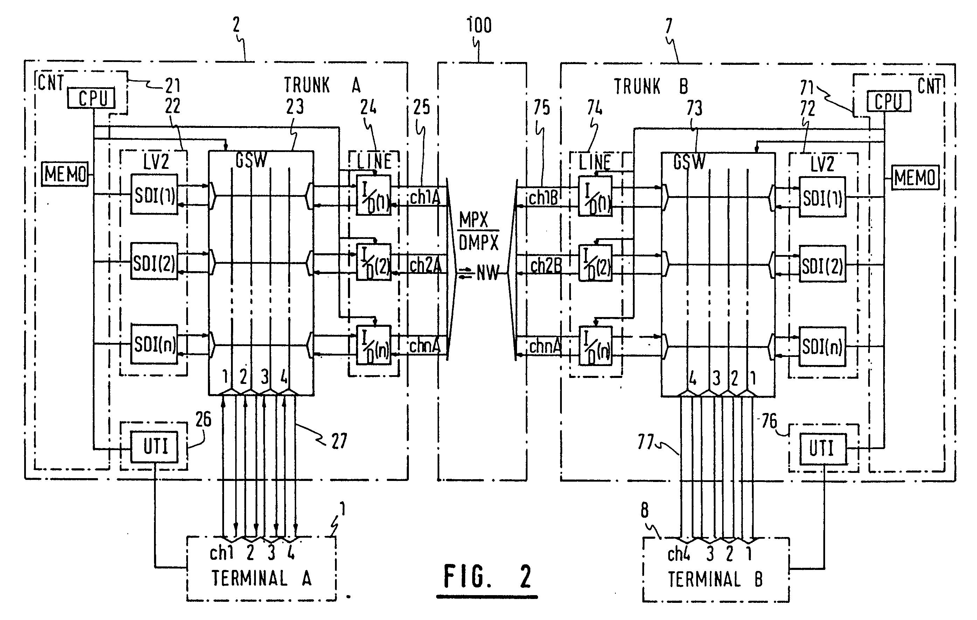

In this embodiment of the present invention, a channel group compose of four channels, as an example, is to be linked for instance between supervisory console 1 in maintenance center MC and test adapter 8-2 in local switch office LS, via an ordinary digital telephone network. Namely, four test channels CONT(1), OTL(1), TTL(1) and MTL(1) from console 1 in maintenance center MC are to be connected in order respectively to test channels CONT(8), OTL(8), TTL(8) and MTL(8) of test adapter 8-2 in local switch office LS. The group trunks 2, 7-1 and 7-2 in maintenance center MC or local switch office LS are all the same ones (all of the same kind). The function of a group service trunk will be described with respect to Fig. 2.

Fig. 2 illustrates composition and operation of a group trunk in accordance with an embodiment of the present invention. In the Figure, in trunk A(2), 21 is a stored program type controller unit CNT having a central processing unit CPU and a memory device MEMO. 22 is a serial data interface for data link control, 23 is a cross connected gate switch (GSW) for data paths, and 24 is an inserter and dropper (I/D) for line signals. 22, 23 and 24 can be provided by integrated circuits (IC) and so can be made very compact and cheap. 25 indicates (horizontal) channel paths connecting the group trunk 2 and communication network 100, which includes the digital switch networks of TS and LS, 4, 5 and 6 in Fig. 1, and all the transmission digital links connecting the switch networks. 26 is a user terminal interface, and 27 indicates channel paths (vertical channel paths) (in this case four channels are involved) between user terminal 1 (in this case it is a supervisory console) and group trunk 2. The same (kind of) service trunk is used for local station LS. In Fig. 2, the reference numeral 7 designates a group trunk in the local office LS of Fig. 1.

The line signal inserter/dropper (I/D)s 24 is a line signal circuit for transmitting or receiving a line signal for each channel, under control of central processing unit CPU.

The serial data interface (SDI) 22 is a processor which converts a parallel data group from the CPU to a serial data group for a PCM (pulse code modulation) channel, or vice versa. SDI is also used to provide each data item with a channel identification signal corresponding to the channel in the group over which the data item is sent out, under the control of the CPU, or to distinguish a channel identification signal from a PCM data channel.

The gate switches (GSW) 23 provide a switching circuit which connects the channels established in the group trunk to a user terminal (a console or test adapter) i.e. which connects the horizontal channels of the group trunk, going to the communication network 100, to the vertical channels of the group trunk, going to the user terminal. The switching circuit includes an interface for a data path from the CPU, because it is controlled by the CPU via this data path.

The memory device MEMO is used to store a control program, and necessary data for switchings.

The user terminal interface (UTI) 26 is an interface circuit used for transmitting or receiving a signal between the user terminal (console or adapter) and the group trunk. Calls from the console or adapter are transmitted through this interface to the controller (CNT) 21 of the group trunk.

All these circuits are similar to those used in previous transmission networks or are easily obtained by simple modifications.

A group connection operation will now be described with reference to Figs. 1 and 2.

The operation of the system is started by hooking off a telephone on the console 1. As mentioned before, the description here will be given for a system having a channel group of four channels, but it will be understood that the invention is not limited to such a four-channel group;

any number of channels may be grouped together.

The hook-off is detected by central processing unit CPU, (four vertical channels of the group trunk A, 2 linked to the console 1, are connected by GSW to four horizontal channels of the group trunk A, 2) and four call signals are originated separately in four (I/D)s 24. These signals are sent out to channel paths 25 (horizontal channel paths), used as line signals for connections to the communication network 100. The connections are processed by the CPU according to stored program and information from the user terminal 1. All control data and control programs for the CPU are stored in the memory device MEMO beforehand.

Each line signal is multiplexed by a PCM (pulse code modulation) multiplexer and sent to toll switch TS. This process is similar to ordinary PCM multiplex systems.

Next, the phone number of the group trunk 7-2 in local switch station LS, whose equipments are to be tested, is dialled from the user terminal 1. This dial signal is also sent out in each of the same four horizontal channels and sent to the toll switch TS, in a similar manner to the call signals.

Reference letters A or B designate, hereinafter, that the parts to which they relate are located at a sending terminal and at a receiving terminal respectively. For example, terminal A means terminal equipment of the maintenance center, and trunk B means a trunk in the receiving terminal.

In the communication network 100, each of the four horizontal channels extends its route path towards the switch network 6 (NW2) of terminal local office LS, finding idle paths and idle trunks between maintenance. center MC and the terminal local office LS, in a similar manner to ordinary telephone switching. Therefore, the call signals originated from each of four horizontal channels ch-1A, ch-2A, ch-3A and ch-4A of group trunk A, are respectively terminated each to one of n horizontal channels of the receiving trunk B.

Answer signals which are generated by signal generator means (not shown) are sent back from each channel I/D of the receiving trunk B (7-2) to corresponding I/D's of the sending trunk A. This is achieved in a manner similar to that used for ordinary telephone lines.

Thus, four communication paths are established, between the two group trunks A and B.

However, the four horizontal sending channels ch-1A, ch-2A, ch-3A and ch-4A are not always connected to horizontal channels ch-1B, ch-2B, ch-3B and ch-4B of the receiving trunk B respectively, in that order.

In order to distinguish the destination (vertical channel) at which a signal should be received, to every signal (including call signal) or data item sent out from each channel of group trunk A there is added an identification code which indicates the terminal or destination to which the data should be sent (channel address). These data identification codes are added by SDI-A under the control of CPU-A. On the other hand, each of the four channel paths (PCM serial data paths) established in the group trunk B is connected to the CPU-B via each serial data interface SDI-B. SDI-B detects the identification code (channel address) of arriving data, and sends it to CPU-B. According to this information, CPU-B controls gate switch 73, and switches the paths between each input (horizontal) channel path 75 and to each destination (vertical) channel in output path 77 of the group trunk B.

In such a manner the four vertical channels CONT(1), OTL(1), TTL(1) and MTL(1) of terminal A are connected respectively to the four vertical channels CONT(8), OTL(8), TTL(8) and MTL(8) of terminal B, and orderly connection of the channel group is established. Using these four channels remote testing of the local office is performed. Such testing is not directly related to the present invention, it will not be described further.

The above description has been given for an example of group connection for a remote maintenance center of a telephone company. Of course, the present invention is not limited to this particular application, and the numbers of channels which can form a group is not limited to four.

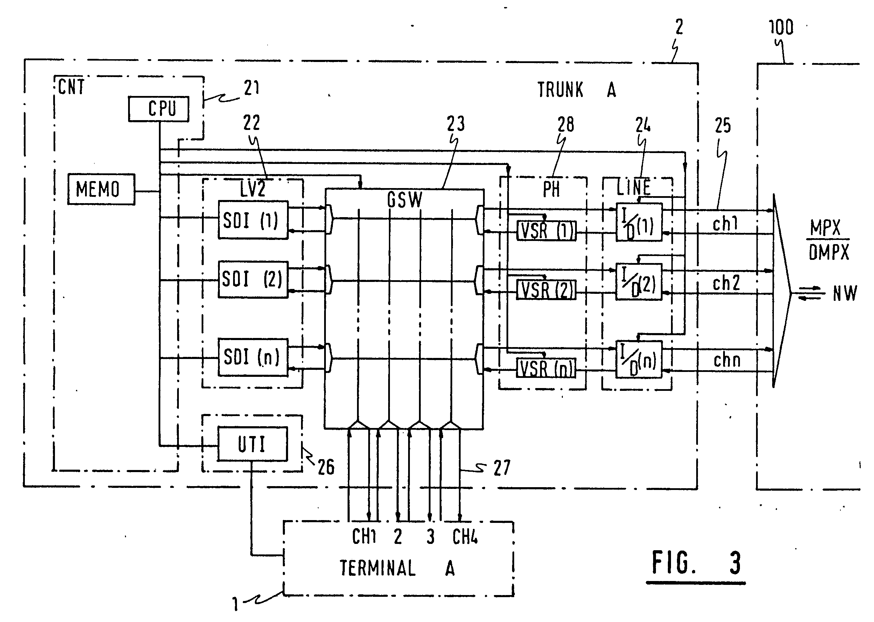

Fig. 3 is a block diagram for another type of group trunk, applicable to a group connection, according to the present invention. The Figure shows group trunk A (a trunk used for a sending terminal). However, as indicated above, the same trunk (the same kind of trunk) may be used at a receiving side, as a trunk B. In this embodiment, the number of channels which are group connected is n. Namely, ch-1A, ch-2A, ···, ch-nA are linked as a group to any other station which is provided with a group trunk.

The group trunk of Fig. 3 is applicable for a channel group which is required to provide not only orderly (space) connection, but also orderly arrival of data items at the receiving side (orderly time connection). This involves maintaining times of arrival at the destination in a definite phase relationship, in order to maintain a phase relationship between each channel in the group. A requirement for orderly arrival (i.e. maintenance of a phase relationship) occurs often in multiplex digital data transmission.

In a general digital telephone system, the network is synchronised in order to switch time divided multiplex signals. The digital telephone network is synchronized so far as frequency synchronization and frame synchronization are concerned, but phase synchronization between data channels is not provided, because it is not required for telephony.

Therefore, when single frames of data are sent via four channels (with a system of Fig. 1, for example), there can occur a time delay of one or two frames between the received data from the four channels. However, once a group trunk has been established, these time delays between data in the different channels remain constant. Therefore, if these time delays are corrected it is possible to establish a broad band data link, utilizing a plurality of telephone channels.

The group trunk shown in Fig. 3 is provided with a function for phase correction. In this embodiment of the present invention the group trunk is provided with a variable shift register VSR for each channel path. The process of time delay correction is as follows.

(1) After channel establishment of n channels is completed, the CPU-A sends a test signal through each channel with the same phase.

(2) The test signals as received by I/D-B are sent to CPU-B.

(3) CPU-B measures the time delays between the received signals, and sends the measured delay times to MEMO, and stores them in it.

(4) In MEMO there is stored in advance a program for control of the VSR's according to the measured delay times.

(5) CPU-B controls the VSR of each channel according to the program and delay time data stored in Memo.

With such a process, the equalization of or compensation for delay times between the data channels is accomplished (time order is achieved). Thus, a broad band data link between trunk-A and trunk-B is established, using n telephone channels.

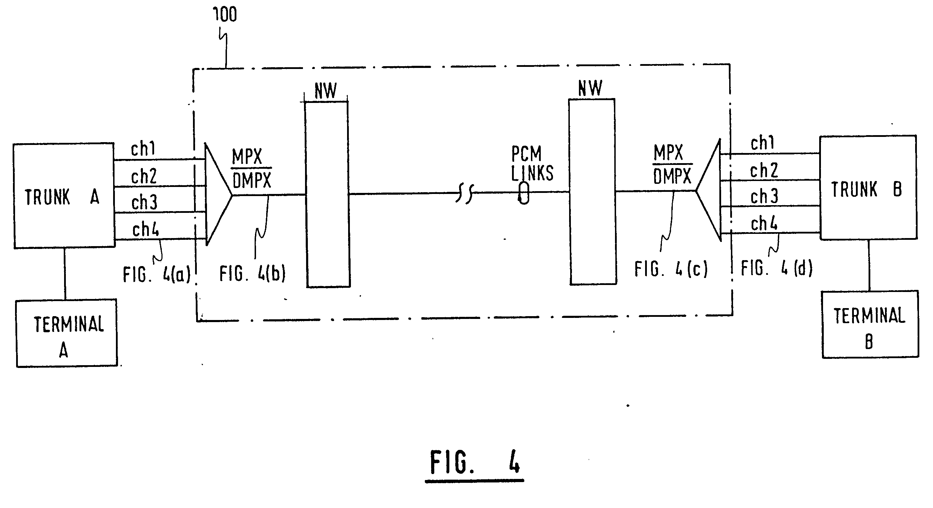

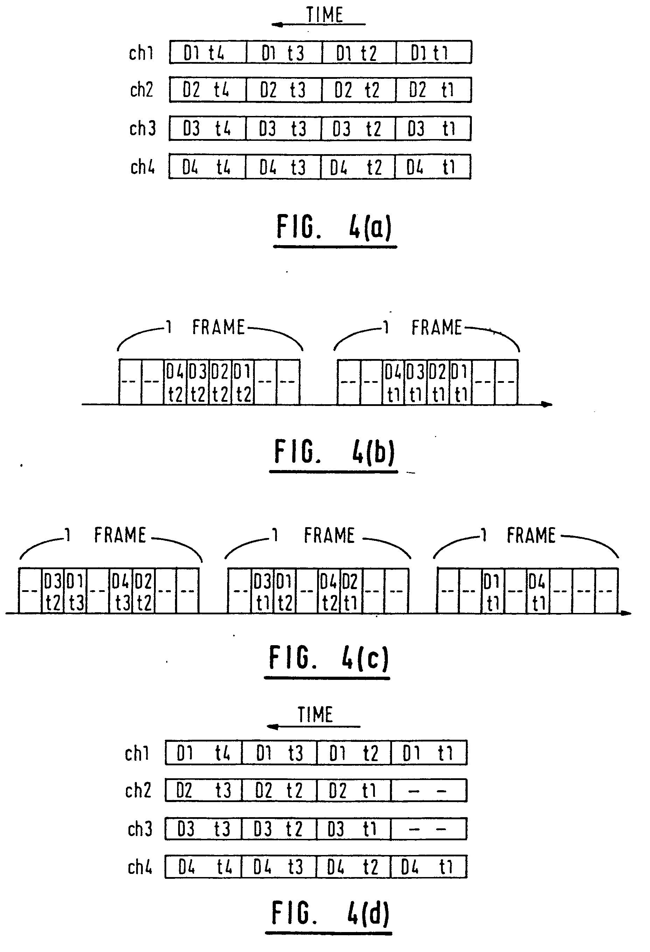

Fig. 4 illustrates the phase relationships of data signals in a group connection system as described above. In the Figure, there is shown schematically an outline of a group connection system, and diagrams illustrating time relationships between data elements at several points indicated in the Figure. The Figure concerns an example in which four byte signals are sent out using a group connection of four channels. Each byte is an eight bit signal.

Fig. 4(a) shows the time relationship of data elements as sent out to each of the four group channels (ch-1 to ch-4) of group trunk A. From ch-1 there are sent out data elements $D_1t_1$, $D_1t_2$, $D_1t_3$ and $D_1t_4$ at times $t_1$, $t_2$, $t_3$ and $t_4$ respectively. From ch-2 there are sent out data elements $D_2t_1$, $D_2t_2$, $D_2t_3$ and $D_2t_4$ at the same times $t_1$, $t_2$, $t_3$ and $t_4$ respectively. Similarly from ch-3 and ch-4, data elements $D_3t_1$ ······ are sent out, as shown in the Figure.

These data elements are time divided, multiplexed and combined into frames in time space, as shown in Fig. 4(b), by multiplexer MPX, and transmitted into switching network 100. In the switching network, a byte of data is regarded as a unit data element, and data is switched byte by byte, finding idle channels. So the delay time of data arriving at a receiving trunk differs from channel to channel. When the data arrives at a demultiplexer DMUX of the destination station, therefore, the order of data elements in a frame is altered, and it is not always certain that data elements forming one transmitted frame will all be found in one similar received frame. An example of such a situation is shown in Fig. 4(c). Data elements are disordered — note the sequence of data elements $D_2$, $D_4$, $D_1$ and $D_3$, in Fig. 4(c) in each frame; and moreover data elements for $D_2$ and $D_3$ for $t_1$ are not included in the same frame as data elements $D_1$ and $D_4$ for $t_1$ because of time delays.

The phase equalizer 28 in Fig. 3 is provided for rearranging these disordered phases of data elements. The phase equalizer is composed of variable shift registers VSR provided for each channel. The process of reordering the data elements is similar to that described with regard to Fig. 2. Namely, when these serial data elements are demultiplexed by MPX/DMPX-B, and distributed to each channel, the signal in each channel becomes as shown in Fig. 4(d). The arrival times of each data of $t_1$, is detected by SDI-B and CPU-B. The time delays involved (multiples of the frame period) are stored in MEMO-B, and CPU-B controls the VSRs-B to equalize the delay times for all the channels, according to a program stored in MEMO-B beforehand.

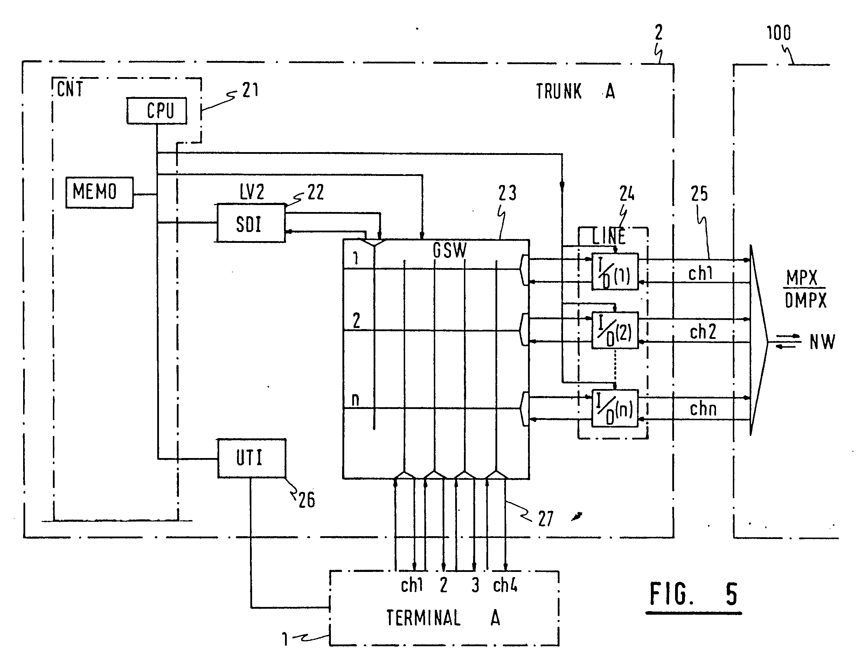

Fig.5 shows a group trunk in accordance with another embodiment of this invention. This is a simplified trunk corresponding to that of Fig. 2. In comparison to Fig. 2, only one serial data interface SDI 22 is linked to gate switching network (GSW) 23. In this example four channels of terminal A are orderly group connected through n channels of group trunk A, to four channels of terminal B included in group trunk B (not shown)-. Operation of group connection is as follows:

(1) Similarly to Fig. 2, by call generation and dialling from terminal A to terminal B, four channels are established between the two terminals.

(2) Among of these four channels, the first established path is selected as a control channel. Let this control channel be established between ch-2A and ch-5B (not shown).

(3) CPU-A sends an identification signal code for CH-1 through channel ch-1A. Let this identification signal code be received by I/D(3)-B. Then CPU-B is informed that ch-3B should be connected to CH-1B, and this is memorized in MEMO-B.

(4) Next, CPU-A sends an identification signal code for CH-2A through ch-2A. Let this identification signal code be received by I/D(8)-B. Then CPU-B is informed that ch-8B should be connected to CH-2B, and it is memorized in MEMO-B.

(5) In a similar manner, the other channels are identified with each other. Control data for GSW-B is stored in MEMO-B.

(6) According to the control data and a program stored in MEMO-B beforehand, CPU-B controls GSW-B so as to connect the four channels in orderly fashion.

It should be pointed out that simplification as seen in Fig. 5 is applicable also to the group trunk as shown in Fig. 3.

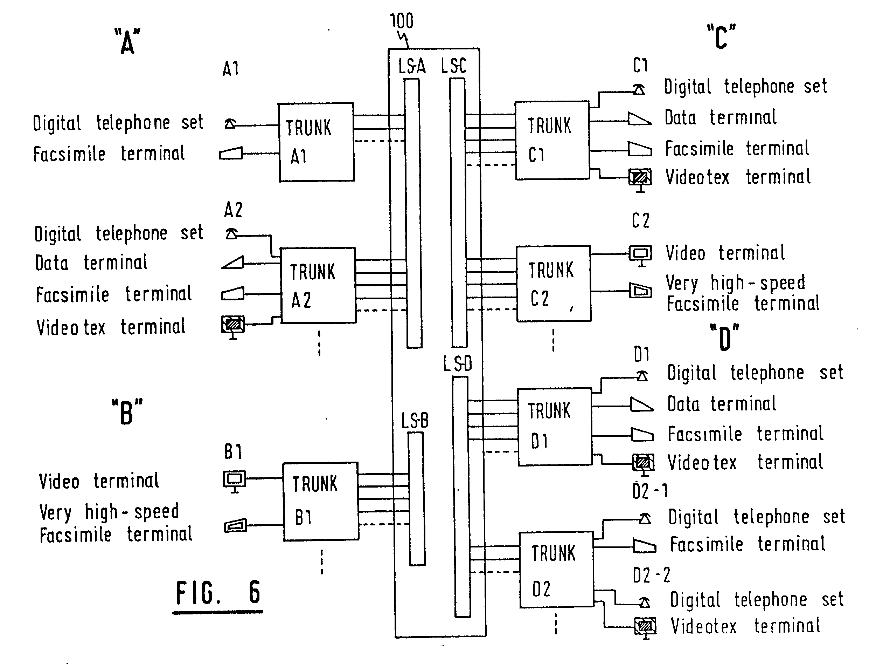

Fig. 6 illustrates an example of a comprehensive data transmission network which enables the use of telephone and other data terminals in a same network, applying channel group connection systems in accordance with embodiments of the present invention.

Fig. 6 shows examples of group connections between areas. An area is a group of subscribers all linked to the same local station LS. A subscriber can use any type of terminal equipment. for example, subscriber A1 uses a telephone set and a facsimile terminal, subscriber A2 uses a telephone set, a data terminal, and facsimile and video-tex terminals. Subscribers A1, A2 and so on are located in area A, and they are linked to local station LS-A Similarly, a subscriber C2 of area C, linked to local station LS-C, has a video-tex terminal and a very high speed facsimile terminal. Any other subscriber, as shown in the Figure, can use any type of terminal equipment, the only limit is that they are digitized and that they are linked to a local station via a group trunk. Number of channels to be linked to the local station depends on the frequency band of the information which is handled by the terminal equipment to be used.

Any subscriber can call another to send information, simply by dialling from his user terminal the telephone number of a subscriber who has same terminal equipment as him. When he dials the telephone number and specifies the equipments to be used, the group trunk finds out the terminal equipment and orderly links a necessary number of specified channels between them.

Referring to Fig. 6, for example, the user of the group terminal A2 has a digital telephone set, a data terminal, and facsimile, and video-tex. He can link his equipment to any similar equipment held by any other subscriber. When he wants to link his telephone and facsimile terminal, for example, to those of subscriber D1. He dials from his terminal A2 the telephone number of subscriber D1, and he specifies the equipment to be used are telephone, and facsimile. The UTI of Trunk A2 sends the information about the equipment and channels to be used, to the CPU, and the data is stored in MEMO. Then in a manner similar to that described above, the group trunks of both terminals (group trunk A1 and D1) connect in orderly fashion telephone to telephone, and facsimile to facsimile, and of course time delays are equalized.

It should be pointed out that if a user terminal equipment does not include dialling equipment (for example the subscriber B1) an ordinary dialling equipment (not shown) is attached to the terminal equipments. It is also possible, as for the subscribers D2-1 and D2-2 shown in Fig. 6, for a plurality of subscribers to commonly use a group trunk.

As has been disclosed above, the present invention enables a digital telephone network to be used as a data transmission network.

In the above disclosure the equipment and circuit elements such as central processing unit CPU memory device MEMO, serial data interface SDI, gate switch GSW, line signal inserter/dropper I/D, variable shift register VSR and user terminal interface UTI etc. are all known in themselves and their use in a communication system will be readily provided by those skilled in the art.

## Claims

1. A system for connecting channels, in an ordered manner, between a terminal which is or is acting as a sending terminal and has a group of sending channels and a terminal which is or is acting as a receiving terminal and has a group of receiving channels, via a digital communication network, comprising:

sending terminal equipment, which is provided in the terminal which is or is acting as a sending terminal, operable to generate a plurality of data items for sending over respective channels of said group of sending channels at a time;

receiving terminal equipment, which is provided in the terminal which is or is acting as a receiving terminal, operable to receive the plurality of data items over respective channels of said group of receiving channels;

a digital communication network which includes a digital data transmission network and a digital data switching network, operable to link sending and receiving channels of the terminals via telephone channels of the network;

each of the terminals having a respective group trunk comprising:

means for originating or terminating a call signal assigned to the group trunk of the terminal which is or is acting as a receiving terminal, accordingly as the terminal in which the means is provided is or is acting as a sending terminal or a receiving terminal;

means for providing a channel identification signal for each data item sent out from sending terminal equipment when the terminal in which the trunk is provided is or is acting as a sending terminal, each channel identification signal serving to identify the respective receiving channel of the group of receiving channels over which the data items concerned is to be received;

means for distinguishing channel identification signals from received data items when the terminal in which the trunk is provided is or is acting as a receiving terminal;

the group trunks being thus operable to control the space and time order of the plurality of data items arriving at the terminal which is or is acting as receiving terminal, to connect the sending and receiving channels in an ordered manner.

2. A system according to claim 1, wherein each group trunk comprises:

a plurality of vertical channel paths for linking the group trunk to terminal equipment of the terminal in which the trunk is provided, thereby to provide the sending or the receiving channels accordingly as the terminal is or is acting as a sending or receiving terminal;

a plurality of horizontal channel paths, being telephone channels of the communication network, for linking the communication network and the group trunk;

a controller (CNT), which includes a central processing unit (CPU) and a memory device (MEMO), operable to control the space and time orders of data signals arriving at the terminal in which the trunk is provided, when the terminal is or is acting as a receiving terminal, according to a program and data stored in the memory device;

user terminal means (UTI) operable to transmit signals originating from terminal equipment of the terminal in which the trunk is provided to the controller, when the terminal is or is acting as a sending terminal;

serial data interface means (SDI), connected with the plurality of horizontal channel paths, for providing serial data for those channel paths, controlled by the controller, operable to provide or to distinguish identification signals for data signals generated by sending terminal equipment accordingly as the terminal in which the trunk is provided is or is acting as a sending terminal or a receiving terminal;

a plurality of line signal inserter and droppers (I/D), connected to the plurality of horizontal channel paths and controlled by the controller via the user terminal means, operable to originate or terminate a call signal assigned to a group trunk accordingly as the terminal in which the trunk is provided is or is acting as a sending terminal or a receiving terminal; and

a gate switch network which is connected to the vertical and horizontal channel paths and comprises a plurality of gate switches provided respectively at the cross points of the vertical and horizontal paths, the gate switches being operable selectively to connect the vertical and horizontal paths under the control of the controller.

3. A system according to claim 2, wherein:

the group trunk in the terminal which is or is acting as a sending terminal is operable to select from amongst its horizontal channel paths a required number of paths corresponding to the required number of vertical channel paths to be connected to sending terminal equipment, and to send the same call signal, assigned to a receiving group trunk, to each of the selected horizontal channel paths, through its line signal inserter and droppers (I/D)s under the control of its controller; and

the group trunk in the terminal which is or is acting as a receiving terminal, is operable to receive the call signals and to send back answer signals, to the terminal which is or is acting as the sending terminal, through its line signal inserter and droppers under control of its controller, and thereby establish the required number of channel paths between the sending and receiving terminals.

4. A system according to claim 2, wherein:

the group trunk in the terminal which is or is acting as a receiving terminal is operable to distinguish channel identification signals from the data items received via its horizontal channel paths, by its serial data interface means, and its central processing unit is operable to control its gate switches by program stored in its memory device and in accordance with the received channel identification signals, to switch connections between its horizontal channel paths and its vertical channel paths.

5. A system according to claim 2, wherein each group trunk further comprises a phase equalizing means, including a plurality of variable shift registers (VSR) connected to its horizontal paths, the variable shift registers being operable to vary the delay time of received signals on the horizontal channel paths of the trunk under the control of the central processing unit of the trunk, to equalize transmission delay times for all of the channels of the group.

6. A system according to claim 2, wherein the serial data interface means of each group trunk comprise a plurality of serial data interfaces connected respectively to the horizontal channel paths of the group trunk.

7. A system as claimed in claim 2, wherein the serial data interface means of each group trunk comprise a single serial data interface connected to a vertical path of the gate switch network of the trunk.

8. A system as claimed in any preceding claim, wherein the sending terminal equipment comprises different types of terminal equipment units, and wherein the receiving terminal equipment comprises different types of terminal equipment units.

9. A system as claimed in claim 8, wherein the different types of terminal equipment units are selected from computer units, facsimile units, television units and digital telephone units.

**Patentansprüche**

1. System zum Verbinden von Kanälen, in einer geordneten Weise, zwischen einem Anschluß, der als ein Sendeanschluß wirkt und eine Gruppe von Sendekanälen hat, und einem Anschluß, der als Empfangsanschluß wirkt und eine Gruppe von Empfangskanälen hat, über ein digitales Kommunikationsnetzwerk, mit:

einer Sendeanschlußeinrichtung, die in dem Anschluß vorgesehen ist, der ein Sendeanschluß ist oder als einer arbeitet, die betreibbar ist, um eine Vielzahl von Datengrößen zu erzeugen, um sie gleichzeitig über entsprechende Kanäle der genannten Gruppen von Sendekanälen zu senden;

einer Empfangsanschlußeinrichtung, die in dem Anschluß vorgesehen ist, der ein Empfangsanschluß ist oder als einer arbeitet, die betreibbar ist, um die Vielzahl von Datengrößen über entsprechende Kanäle der genannten Gruppe von Empfangskanälen zu empfangen;

einem digitalen Kommunikationsnetzwerk, welches ein digitales Datentransmissionsnetzwerk und ein digitales Datenschaltnetzwerk umfaßt und betreibbar ist, um Sende- und Empfangskanäle der Anschlüsse über Telefonkanäle des Netzwerkes zu verbinden;

wobei jeder der Anschlüsse eine entsprechende Gruppenverbindungsleitung hat, die umfaßt:

Einrichtungen zur Erzeugung oder Beendigung eines Rufsignals, welches der Gruppenverbindungsleitung des Anschlusses zugeordnet ist, der Empfangsanschluß ist oder als einer arbeitet, in Übereinstimmung damit, ob der Anschluß, in dem die Einrichtung vorgesehen ist, ein Sendeanschluß oder Empfangsanschluß ist oder als einer arbeitet;

Einrichtungen zum Liefern eines Kanalidentifizierungssignals für jede Datengröße, die von einer Sendeanschlußeinrichtung ausgesendet wird, wenn der Anschluß, in dem die Verbindungsleitung vorgesehen ist, ein Sendeanschluß ist oder als einer arbeitet, wobei jedes Kanalidentifizierungssignal dazu dient, den entsprechenden Empfangskanal von der Gruppe von Empfangskanälen, über welche die betreffenden Datengrößen empfangen werden sollen, zu identifizieren;

Einrichtungen zur Unterscheidung von Kanalidentifizierungssignalen von empfangenen Datengrößen, wenn der Anschluß, in dem die Verbindungsleitung vorgesehen ist, ein Empfangsanschluß ist oder als einer arbeitet;

wobei die Gruppenverbindungsleitungen so betreibbar sind, um die Raum- und Zeitordnung der Vielzahl von Datengrößen, die an dem Anschluß ankommen, der Empfangsanschluß ist oder als einer arbeitet, zu steuern, um die Sende- und Empfangskanäle in geordneter Weise zu verbinden.

2. System nach Anspruch 1, bei dem jede Gruppenverbindungsleitung umfaßt:

eine Vielzahl von vertikalen Kanalwegen zum Verbinden der Gruppenverbindungsleitung mit einer Anschlußeinrichtung dès Anschlusses, in dem die Verbindungsleitung vorgesehen ist, um dadurch die Sende- oder Empfangskanäle, in Übereinstimmung damit, ob der Anschluß ein Sende- oder Empfangsanschluß ist oder als ein solcher arbeitet, vorzusehen;

eine Vielzahl von horizontalen Kanalwegen, die Telefonkanäle des Kommunikationsnetzes sind, um das Kommunikationsnetzwerk und die Gruppenverbindungsleitung zu verbinden;

einen Kontroller (CNT), der eine zentrale Prozessoreinheit (CPU) und eine Speichervorrichtung (MEMO) umfaßt und betreibbar ist, um die Raum- und Zeitordnungen der Datensignale zu steuern, die an dem Anschluß ankommen, in dem die Verbindungsleitung vorgesehen ist, wenn der Anschluß, ein Empfangsanschluß ist oder als ein solcher arbeitet, entsprechend einem Programm und Daten, die in der Speichervorrichtung gespeichert sind;

Benutzeranschlußeinrichtungen (UTI), die betreibbar sind, um Signale, die von Anschlußeinrichtungen des Anschlusses erzeugt werden, in dem die Verbindungsleitung vorgesehen ist, zu dem Kontroller zu übertragen, wenn der Anschluß ein Sendeanschluß ist oder als einer arbeitet;

serielle Datenschnittstelleneinrichtungen (SDI), die mit der Vielzahl von horizontalen Kanalwegen verbunden sind, um, gesteuert durch den Kontroller, serielle Daten für jene Kanalwege zu liefern, die betreibbar sind, um Identifikationssignale für Datensignale zu liefern oder zu unterscheiden, die von der Sendeanschlußeinrichtung in Übereinstimmung damit erzeugt werden, ob der Anschluß, in dem die Verbindungsleitung vorgesehen ist, ein Sendeanschluß oder ein Empfangsanschluß ist oder als einer arbeitet;

eine Vielzahl von Leitungszeicheneinfügern- und -unterdrückern (I/D) mit der Vielzahl von horizontalen Kanalwegen verbunden und durch den Kontroller über die Benutzeranschlußeinrichtung gesteuert werden und betreibbar sind, um ein Rufsignal zu erzeugen oder zu beenden, welches einer Gruppenverbindungsleitung in Übereinstimmung damit zugeordnet wird, ob der Anschluß. in dem die Verbindungsleitung vorgesehen ist, ein Sendeanschluß oder ein Empfangsanschluß ist oder als einer arbeitet; und

ein Torschaltnetzwerk, welches mit den vertikalen und horizontalen Kanalwegen verbunden ist und eine Vielzahl von Torschaltern umfaßt, die jeweils an den Kreuzungspunkten der vertikalen und horizontalen Wege vorgesehen sind, welche Torschalter betreibbar sind, um selektiv die vertikalen und horizontalen Wege unter der Steuerung des Kontrollers zu verbinden.

3. System nach Anspruch 2, bei dem:

die Gruppenverbindungsleitung in dem Anschluß, der ein Sendeanschluß ist oder als einer arbeitet, betreibbar ist, um aus seinen horizontalen Kanalwegen eine erforderliche Zahl von Wegen auszuwählen, die der erforderlichen Zahl von vertikalen Kanalwegen entsprechen, die mit der Sendeanschlußeinrichtung verbunden werden sollen, und um das selbe Rufzeichen, das einer empfangenden Gruppenverbindungsleitung zugeordnet ist, an jeden der ausgewählten horizontalen Kanalwege durch seine Leitungszeicheneinfüger und -unterdrücker (I/D) zu senden, unter Steuerung durch seinen Kontroller; und

die Gruppenverbindungsleitung in dem Anschluß, der Empfangsanschluß ist oder als einer arbeitet, betreibbar ist, um die Rufsignale zu empfangen und Antwortsignale an den Anschluß zurückzusenden, der Sendeanschluß ist oder als einer arbeitet, über seine Leitungszeicheneinfüger und -unterdrücker unter Steuerung durch seinen Kontroller und dadurch die erforderliche Zahl von Kanalwegen zwischen den Sende- und Empfangsanschlüssen herzustellen.

4. System nach Anspruch 2, bei dem:

die Gruppenverbindungsleitung in dem Anschluß, der ein Empfangsanschluß ist oder als einer arbeitet, betreibbar ist, um Kanalidentifizierungssignale von den Datengrößen, die über seine horizontalen Kanalwege durch ihre seriellen Datenschnittstelleneinrichtungen empfangen werden, zu unterscheiden, und ihre zentrale Prozessoreinheit betreibbar ist, um ihre Torschalter durch ein Programm, das in ihrer Speichervorrichtung enthalten ist, und in Übereinstimmung mit empfangenen Kanalidentifizierungssignalen zu steuern, um Verbindungen zwischen ihren horizontalen Kanalwegen und ihren vertikalen Kanalwegen zu schalten.

5. System nach Anspruch 2, bei dem jede Gruppenverbindungsleitung ferner eine Phasenequalizereinrichtung umfaßt, die eine Vielzahl von variablen Schieberegistern (VSR) umfaßt, die mit ihren horizontalen Wegen verbunden sind, wobei die variablen Schieberegister betreibbar sind, um die Verzögerungszeit der empfangenen Signale auf den horizontalen Kanalwegen der Verbindungsleitung unter Steuerung durch die zentrale Prozessoreinheit der Sammelleitung zu variieren, um Transmissionsverzögerungszeiten für alle Kanäle der Gruppe auszugleichen.

6. System nach Anspruch 2, bei dem die seriellen Datenschnittstelleneinrichtungen jeder Gruppenverbindungsleitung eine Vielzahl von seriellen Datenschnittstellen umfassen, die jeweils mit den horizontalen Kanalwegen der Gruppenverbindungsleitung verbunden sind.

7. System nach Anspruch 2, bei dem die seriellen Datenschnittstelleneinrichtungen jeder Gruppenverbindungsleitung eine einzige serielle Datenschnittstelle umfassen. die mit einem vertikalen Weg des Torschaltnetzwerkes der verbindungsleitung verbunden ist.

8. System nach einem der vorhergehenden Ansprüche, bei dem die Sendeanschlußeinrichtung verschiedene Typen von Anschlußeinrichtungseinheiten umfaßt, und bei dem die Empfangsanschlußeinrichtungen verschiedene Typen von Anschlußeinrichtungseinheiten umfaßt.

9. System nach Anspruch 8, bei dem die verschiedenen Typen von Anschlußeinrichtungseinheiten ausgewählt sind aus Computereinheiten, Facsimileeinheiten, Fernseheinheiten und Digitaltelefoneinheiten.

**Revendications**

1. Système de connexion de canaux, d'une manière ordonnée entre un terminal qui est ou qui fonctionne comme un terminal d'émission et qui comporte un groupe de canaux d'émission et un terminal qui est ou qui fonctionne comme un terminal de réception et qui comporte un groupe de canaux de réception, par l'intermédiaire d'un réseau de télécommunications numériques, comportant:

un équipement terminal d'émission qui est prévu dans le terminal qui est ou qui fonctionne comme un terminal d'émission, ayant pour fonction de produire plusieurs articles de données à émettre sur des canaux respectifs dudit groupe de canaux d'émission, à un instant;

un équipement terminal de réception, qui est prévu dans le terminal qui est ou qui fonctionne comme un terminal de réception, ayant pour fonction de recevoir les plusieurs articles de données sur des canaux respectifs dudit groupe de canaux de réception;

un réseau de télécommunications numériques qui comporte un réseau de transmission de donnes numériques et un réseau de commutation de données numériques, ayant pour fonction de relier des canaux démission et de réception des terminaux par des canaux téléphoniques du réseau;

chacun des terminaux comprenant une jonction de groupe respective qui comporte:

un dispositif pour émettre ou pour recevoir un signal d'appel affecté à la jonction de groupe du terminal qui est ou qui fonctionne comme un terminal de réception, selon que le terminal dans lequel le dispositif est prévu est ou fonctionne comme un terminal d'émission ou terminal de réception;

un dispositif qui produit un signal d'identification de canal pour chaque article de données émis par l'équipement terminal d'émission quand le terminal dans lequel la jonction est prévue est ou fonctionne comme un terminal d'émission, chaque signal d'identification de canal servant à identifier le canal de réception respectif du groupe de canaux de réception sur lequel les articles de donnes concernés doivent être reçus;

un dispositif qui distingue les signaux d'identification de canaux à partir des articles de données reçus quand le terminal dans lequel la jonction est prévue est ou fonctionne comme un terminal de réception;

les jonctions de groupe ayant ainsi pour fonction de commander l'ordre dans l'espace et dans le temps des plusieurs articles de données arrivant au terminal qui est ou qui fonctionne comme un terminal de réception, pour connecter les canaux d'émission et de réception d'une manière ordonnée.

2. Système selon la revendication 1, dans lequel chaque jonction de groupe comporte:

plusieurs circuits de canaux verticaux destinés à relier la jonction de groupe à un équipement terminal du terminal dans lequel la jonction est prévue de manière à produire l'émission ou les canaux reçus suivant que le terminal est ou fonctionne comme un terminal d'émission ou de réception;

plusieurs circuits de canaux horizontaux qui sont des canaux téléphoniques du réseau de télécommunications pour relier le réseau de télécommunications et la jonction de groupe;

un moniteur (CNT) qui comporte une unité centrale de traitement (CPU) et un dispositif de mémoire (MEMO), ayant pour fonction de commander les ordres dans l'espace et dans le temps des signaux de données arrivant au terminal dans lequel la jonction est prévue quand le terminal est ou fonctionne comme un terminal de réception, selon un programme et des données mémorisés dans le dispositif de mémoire;

un dispositif terminal d'usager (UTI) ayant pour fonction d'émettre des signaux émis par l'équipement terminal du terminal dans lequel la jonction est prévue, vers le moniteur, quand le terminal est ou fonctionne comme un terminal d'émission;

un dispositif d'interface de données en série (SDI) connecté aux plusieurs circuits de canaux horizontaux pour produire des données en série pour ces circuits de canaux, commandé par le moniteur, ayant pour fonction de produire ou de distinguer des signaux d'identification pour des signaux de données produits par l'équipement terminal d'émission selon que le terminal dans lequel la jonction est prévue est ou fonctionne comme un terminal d'émission ou un terminal de réception;

plusieurs introducteurs et suppresseurs de signal de ligne (I/D) connectés aux plusieurs circuits de canaux horizontaux et commandés par le moniteur par l'intermédiaire du dispositif terminal d'usager, ayant pour fonction d'émettre ou de recevoir un signal d'appel affecté à une jonction de groupe suivant que le terminal dans lequel la jonction est prévue est ou fonctionne comme un terminal d'émission ou un terminal de réception; et

un réseau de commutation à portes qui est connecté aux circuits de canaux verticaux et horizontaux et comportant plusieurs commutateurs à portes prévus respectivement aux points de croisement des circuits verticaux et horizontaux, les commutateurs à portes ayant pour fonction de connecter sélectivement les circuits verticaux et horizontaux à la commande du moniteur.

3. Système selon la revendication 2, dans lequel:

la jonction de groupe dans le terminal qui est ou qui fonctionne comme un terminal d'émission a pour fonction de sélectionner parmi ses circuits de canaux horizontaux le nombre nécessaire des circuits correspondant au nombre voulu des circuits de canaux verticaux devant être connectés à un équipement terminal d'émission et d'émettre le même signal d'appel affecté à une jonction de groupe de réception, vers chacun des circuits de canaux horizontaux sélectionnés, par l'intermédiaire de ses introducteurs et suppresseurs de signal de ligne (I/D) à la commande de son moniteur; et

la jonction de groupe dans le terminal qui est ou qui fonctionne comme un terminal de réception ayant pour fonction de recevoir les signaux d'appel et d'émettre en retour des signaux de réponse vers le terminal qui est ou qui fonctionne comme le terminal d'émission par ses introducteurs et suppresseurs de signaux de ligne à la commande de son moniteur, établissant ainsi le nombre voulu des circuits de canaux entre les terminaux d'émission et de réception.

4. Système selon la revendication 2, dans lequel:

la jonction de groupe dans le terminal qui est ou qui fonctionne comme un terminal de réception a pour fonction de distinguer des signaux d'identification de canaux à partir des articles de données reçus par l'intermédiaire de ses circuits de canaux horizontaux, au moyen de son dispositif d'interface de données en série, et son unité centrale de traitement ayant pour fonction de commander ses commutateurs à portes par un programme mémorisé dans son dispositif de mémoire et en fonction des signaux d'identification de canaux reçus pour établir des connexions entre ses circuits de canaux horizontaux et ses circuits de canaux verticaux.

5. Système selon la revendication 2, dans lequel chaque jonction de groupe comporte également un dispositif de correction de phase, comprenant plusieurs registres à décalage variable (VSR) connectés à ses circuits horizontaux, les registres à décalage variable ayant pour fonction de modifier le temps de retard des signaux reçus sur les circuits de canaux horizontaux de la jonction à la commande de l'unité centrale de traitement de la jonction pour corriger les temps de retard de transmission de tous les canaux dans le groupe.

6. Système selon la revendication 2, dans lequel le dispositif d'interface de données en série de chaque jonction de groupe comporte plusieurs interfaces de données en série connectées respectivement aux circuits de canaux horizontaux de la jonction de groupe.

7. Système selon la revendication 2, dans lequel le dispositif d'interface de données en série de chaque jonction de groupe comporte une seule interface de donnes en série connectée à un circuit vertical du réseau de commutation à portes de la jonction.

8. Système selon l'une quelconque des revendications précédentes, dans lequel l'équipement de terminal d'émission comporte différents types d'unités d'équipement terminal et dans lequel l'équipement terminal de réception comporte différents types d'unitès d'équipement terminal.

9. Système selon la revendication 8, dans lequel les différents types d'unités d'équipement terminal sont choisis parmi les unités d'ordinateur, les unités de fac-similè, les unités de télévision et les unités de téléphones numériques.

FIG. 1

(MC)    (TS)    (LS)

CONSOLE — TRUNK A — DT — PCM — DT — (TS) — DT — PCM — DT — NW1 — 7-1 — TST₁ 8-1

NW2 — Ch1B 2B 3B 4B — TRUNK B — CONT(B) OTL(B) TTL(B) MTL(B) — TST₂ 8-2

OTL TTL MTL — LC — OGT — TST ICT

EP 0 119 843 B1

FIG. 2

FIG. 3

FIG. 4

EP 0 119 843 B1

TIME

| ch1 | D1 t4 | D1 t3 | D1 t2 | D1 t1 |
| ch2 | D2 t4 | D2 t3 | D2 t2 | D2 t1 |
| ch3 | D3 t4 | D3 t3 | D3 t2 | D3 t1 |
| ch4 | D4 t4 | D4 t3 | D4 t2 | D4 t1 |

## FIG. 4(a)

## FIG. 4(b)

## FIG. 4(c)

TIME

| ch1 | D1 t4 | D1 t3 | D1 t2 | D1 t1 |
| ch2 | D2 t3 | D2 t2 | D2 t1 | — — |
| ch3 | D3 t3 | D3 t2 | D3 t1 | — — |
| ch4 | D4 t4 | D4 t3 | D4 t2 | D4 t1 |

## FIG. 4(d)

FIG. 5

"A"

A1

Digital telephone set

Facsimile terminal

TRUNK A1

A2

Digital telephone set
Data terminal
Facsimile terminal
Video tex terminal

TRUNK A2

"B"

B1

Video terminal
Very high-speed Facsimile terminal

TRUNK B1

100

LS-A  LS-C

LS-B

LS-D

"C"

C1

Digital telephone set
Data terminal
Facsimile terminal
Videotex terminal

TRUNK C1

C2

Video terminal
Very high-speed Facsimile terminal

TRUNK C2

"D"

D1

Digital telephone set
Data terminal
Facsimile terminal
Videotex terminal

TRUNK D1

D2-1

Digital telephone set
Facsimile terminal

D2-2

Digital telephone set
Videotex terminal

TRUNK D2

FIG. 6

EP 0 119 843 B1